# EUROPÄISCHE PATENTANMELDUNG

(11) **EP 1 710 176 A2**
(43) Veröffentlichungstag der Anmeldung: **11.10.2006**
(21) Anmeldenummer: 06007338.4
(22) Anmeldetag: 06.04.2006
(51) Int. Cl.: B65G 21/06

(54) **Gurtförderer**

(30) Priorität: 08.04.2005 DE 102005016410
(71) Anmelder: MiniTec Maschinenbau GmbH & Co. KG, 66914 Waldmohr (DE)
(72) Erfinder: Neumüller, Axel, 66989 Höheischweiler (DE); Risch, Karl Heinz, 57410 Gros-Rederching (FR)
(74) Vertreter: Klein, Friedrich Jürgen

(57) **Zusammenfassung**

Es wird eine Fördervorrichtung zum Transport von Fördergut auf einem Endlos-Fördergurt vorgeschlagen, der an zumindest zwei Umlenkrollen (17,18) anliegt, von denen zumindest eine als angetriebene Umlenkrolle (17) ausgestaltet ist, die angetriebene Umlenkrolle (17) mit einem Antriebsmotor (25) in Wirkverbindung steht, wobei die Wirkverbindung eine Übertragung einer Antriebsbewegung des Antriebsmotors (25) auf die angetriebene Umlenkrolle (17) zum Gegenstand hat, wodurch die zumindest eine angetriebene Umlenkrolle (17) in eine Rotationsbewegung versetzbar ist, die zu einer Transportbewegung des Endlos-Fördergurtes führt, und der Antriebsmotor (25) in Bezug auf eine Transportrichtung der Fördervorrichtung zwischen den beiden Umlenkrollen (17,18) und mit Abstand zu diesen angeordnet ist. Um bei einer solchen Fördervorrichtung einen konstruktiv einfachen und dennoch vorteilhaften Aufbau zu ermöglichen wird vorgeschlagen, daß sich in Übertragungsrichtung der Antriebsbewegung zwischen dem Antriebsmotor (25) und dem Fördergurt ein Hülltrieb befindet, mittels dem der Antriebsmotor (25) mit dem Fördergurt zur Übertragung der Rotationsbewegung in Wirkverbindung steht.

## Beschreibung

Die Erfindung betrifft eine Fördervorrichtung zum Transport von Fördergut auf einem Endlos-Fördergurt, der an zumindest zwei Umlenkrollen anliegt, von denen zumindest eine als angetriebene Umlenkrolle ausgestaltet ist, die angetriebene Umlenkrolle mit einem Antriebsmotor in Wirkverbindung steht, wobei die Wirkverbindung eine Übertragung einer Antriebsbewegung des Antriebsmotors auf die angetriebene Umlenkrolle zum Gegenstand hat, wodurch die zumindest eine angetriebene Umlenkrolle in eine Rotationsbewegung versetzbar ist, die zu einer Transportbewegung des Endlos-Fördergurtes führt, und der Antriebsmotor in Bezug auf eine Transportrichtung der Fördervorrichtung zwischen den beiden Umlenkrollen und mit Abstand zu diesen angeordnet ist

Derartige Fördervorrichtungen werden in vielen Bereichen der Technik, insbesondere in der industriellen Fertigung zum Transport von Gütern, in der Montage oder aber auch in der Logistik, wie beispielsweise im Versandbereich verwand. Das Grundprinzip dieser Fördervorrichtungen besteht darin, daß das Fördergut auf der Außenseite einer oberen Gurtlage des Fördergurtes aufliegt und aufgrund von Haftreibung bei der Bewegung des Förderbandes mitgenommen wird. Der Endlos-Fördergurt ist in der Regel um mindestens zwei zueinander beabstandete Umlenkrollen gespannt, umschlingt die Umlenkrollen teilweise und liegt mit seiner Innenseite an den Umlenkrollen an. Eine der beiden Umlenkrollen wird direkt oder indirekt von einem Elektromotor angetrieben. Die Haftreibung zwischen der angetriebenen Umlenkrolle und dem Förderband führt dann zur Förderbewegung des Förderbandes.

Bei gattungsgemäßen Fördervorrichtungen mit sogenanntem Mittenantrieb war es bisher üblich, daß die Fördervorrichtung an den Bandenden je eine Umlenkrolle, sowie unterhalb der oberen Gurtlage und zwischen den beiden endseitigen Umlenkrollen liegend nochmals drei zusätzliche Umlenkrollen aufweist. Eine der drei zusätzlichen Umlenkrollen ist hierbei als motorisch angetriebene Umlenkrolle ausgestaltet, die beiden weiteren Umlenkrollen dienen lediglich zur Erzeugung eines möglichst großen Umschlingungswinkels des Fördergurts. Mit der angetriebenen Umlenkrolle wird die motorische Bewegung direkt von einer Motor- oder Getriebewelle auf den Fördergurt übertragen. Der Motor und das gegebenenfalls vorhandene Getriebe befinden sich zwischen den beiden endseitigen Umlenkrollen, oftmals in etwa mittig zwischen den beiden Umlenkrollen, daher auch der Name Mittenantrieb.

An dieser vorbekannten Fördervorrichtung kann als nachteilig empfunden werden, daß zur Kraftübertragung relativ viele Einzelteile, insbesondere viele Umlenkrollen, benötigt werden. Die angetriebene Umlenkrolle und die beiden ihr zugeordneten Umlenkrollen ragen relativ weit nach unten. Zur Vermeidung von Einklemmungen, Quetschungen oder Einzügen ist deshalb ein Berührungsschutz erforderlich, der relativ großflächig gestaltet sein muß. Zudem ist der Berührungsschutz von der Breite des Fördergurtes abhängig, weshalb für jede Bandbreite ein eigener Berührungsschutz vorgesehen werden muß. Auch Wartungsarbeiten im Antriebsbereich der Fördervorrichtung gestalten sich vergleichsweise aufwendig, da hierzu viele Komponenten der Fördervorrichtung demontiert und nachfolgend wieder montiert werden müssen.

Auch andere vorbekannte Lösungen mit Mittenantrieb, wie sie beispielsweise aus der WO 93/20000 vorbekannt sind, können nicht zufrieden stellen. Bei dieser, als Tandem-Fördergurtvorrichtung bezeichneten Anordnung, wird ein unterer Gurt über Umlenkrollen geführt und von einem eigenen Motor angetrieben. Der eigentliche Fördergurt liegt auf dem unteren Gurt zumindest entlang eines Längsabschnitts des unteren Gurts auf und wird von einem weiteren Motor angetrieben. Insbesondere im Bereich gemeinsamer Umlenkrollen befindet sich der untere Gurt zwischen der jeweiligen Umlenkrolle und dem Fördergurt. Bei Lösungen wie diesen treten jedoch Probleme auf, wie die erforderliche Synchronisation zwischen den beiden Motoren sowie möglicher Schlupf zwischen den Umlenkrollen und jeweils einem der beiden Gurte einerseits sowie zwischen den beiden Gurten andererseits.

Der Erfindung liegt deshalb die Aufgabe zugrunde eine Fördervorrichtung der eingangs genannten Art mit Mittenantrieb zu schaffen, die konstruktiv einfacher gestaltet ist und trotzdem eine hohe Betriebssicherheit aufweist.

Diese Aufgabe wird bei einer Fördervorrichtung gemäß dem Oberbegriff von Patentanspruch 1 erfindungsgemäß dadurch gelöst, daß die Wirkverbindung der angetriebenen Umlenkrolle mit dem Antriebsmotor einen Hülltrieb umfaßt, der sich in Übertragungsrichtung der Antriebsbewegung zwischen dem Antriebsmotor und dem mit der angetriebenen Umlenkrolle in Kontakt stehenden Fördergurt befindet. Die Erfindung sieht somit vor, zwischen dem Antriebsmotor und dem zu bewegenden Fördergurt einen Hülltrieb anzuordnen. Unter einem Hülltrieb kann ein Endlos-Antriebselement verstanden werden, das mit bestimmtem Umschlingungswinkel über zumindest zwei drehbar gelagerte Drehelemente geführt ist. Mit dem Hülltrieb soll vorzugsweise die Antriebsbewegung des Antriebsmotors auf (zumindest) eine der Umlenkrollen übertragen werden. Durch die so angetriebene Umlenkrolle wiederum soll der Fördergurt angetrieben werden, der hierzu mit Vorteil mit seiner Unterseite direkt gegen die angetriebene Umlenkrolle anliegt.

Eine zweckmäßige Weiterbildung kann vorsehen, daß mittels dem vorzugsweise lediglich einen Antriebsmotor, beispielsweise einem Elektromotor, ein Rad bzw. eine Scheibe des Hülltriebes angetrieben wird, mit der die Antriebsbewegung auf das Hüllglied übertragbar ist. In einer bevorzugten, konstruktiv besonders unaufwendigen erfindungsgemäßen Weiterbildung kann ein Hüllglied des Hülltriebs seine Antriebsbewegung direkt auf eine Umlenkrolle oder eine Welle der Umlenkrolle übertragen, mit der der Fördergurt angetrieben wird.

Obwohl im Gegensatz zu den beschriebenen vorbekannten Fördervorrichtungen bei der Erfindung die Antriebsbewegung nicht direkt vom Antriebsmotor auf eine Umlenkrolle übertragen wird, kann aufgrund von erfindungsgemäßen Maßnahmen dennoch eine deutliche Verringerung des konstruktiven Aufwandes erreicht werden. Da der Hülltrieb selbst auch von der Breite des Förderbandes im wesentlichen unabhängig sein kann, ist es aufgrund der Erfindung möglich mit baugleichen Hülltrieben Fördergurte unterschiedlicher Breite anzutreiben. Bei Herstellern von erfindungsgemäßen Fördervorrichtungen kann hierdurch im Vergleich zu herkömmlichen Fördervorrichtungen die Anzahl zu fertigender und zu bevorratender unterschiedlicher Bauteile gering gehalten werden.

Zudem ermöglicht der erfindungsgemäß vorgesehene Hülltrieb einen Verlauf und eine Führung des Fördergurtes, die sich nur am eigentlichen Zweck des Fördergurtes orientiert, nämlich dem Transport von Gütern. Anders als bei vorbekannten Fördervorrichtungen muß der Fördergurt nicht weit nach unten geführt werden, um eine Antriebsbewegung zu erhalten. Insbesondere wenn ein Reversierbetrieb vorgesehen ist, ist zudem die Spurführung bei dem nun möglichen Zwei-Umlenkrollensystem deutlich einfacher einzustellen als bei dem bisher üblichen Fünfrollensystem. Dadurch läßt sich nun auch eine Gegenbiegung des Fördergurtes vermeiden, wodurch eine Erhöhung der Lebensdauer des Fördergurtes einhergeht. Schließlich führt die Verringerung der Rollenanzahl auch zu einer Verringerung der auftretenden Reibung und damit zu einer geringeren Erwärmung.

Durch den nun erzielbaren Verlauf des Fördergurtes ergibt sich der weitere Vorteil der Möglichkeit einer Vermeidung eines Berührungsschutzes. Dies gilt insbesondere dann, wenn sich das Hüllglied zwischen der oberen und unteren Gurtlage und vorzugsweise auch zwischen und mit Abstand zu den beiden Randbereichen des Fördergurtes befindet. Das Hüllglied kann vorzugsweise vollständig zwischen den beiden Gurtlagen angeordnet sein. In einer besonders bevorzugten erfindungsgemäßen Ausgestaltung kann die Fördervorrichtung ein Gestell aufweisen, das zur Aufnahme von statischen Belastungen der Vorrichtungskomponenten sowie von Betriebsbelastungen vorgesehen ist. Das Hüllglied der Fördervorrichtung kann bei dieser Ausgestaltung mit Vorteil zwischen zwei Trägern des Gestells angeordnet sein.

Der Hülltrieb kann insbesondere als Riementrieb oder Kettentrieb ausgebildet sein, jegliche andere Formen von Hülltrieben sind jedoch grundsätzlich auch verwendbar. Die Kraftübertragung kann mittels Poly-V-Riemen, Flach-, Keil-, Zahnriemen oder Rollenkette und dergleichen erfolgen. Das Hüllglied kann mit Vorteil in einem Bereich über die Umlenkrolle geführt sein, der im Vergleich zu jenem Bereich der Umlenkrolle gegen den der. Fördergurt anliegt, mit einem reduzierten Durchmesser versehen ist. Das Hüllglied kann hierdurch - in Bezug auf die Breite der Umlenkrolle - an einer vorbestimmten Stelle von der Umlenkrolle aufgenommen werden und der Fördergurt an der gleichen Stelle über die Umlenkrolle geführt sein, ohne vom Hüllglied hierbei beeinträchtigt zu werden. Obwohl das Hüllglied zwischen den beiden Rändern des Fördergurtes die Antriebsbewegung auf die Umlenkrolle überträgt, kann somit auch die Antriebsbewegung von der Umlenkrolle auf den Fördergurt auf günstige Weise weiter gegeben werden.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine perspektivische Darstellung eines Ausführungsbeispiels einer erfindungsgemäßen Fördervorrichtung;
- Fig. 2: die Fördervorrichtung aus Fig. 1 in einer Explosiondarstellung;
- Fig. 3: die Fördervorrichtung aus Fig. 1 und Fig. 2 ohne Fördergurt;
- Fig. 4: ein zweites Ausführungsbeispiel in einer perspektivische Darstellung ohne Fördergurt;
- Fig. 5: das Ausführungsbeispiel von Fig. 4 in einer teilweise explosionsartigen Darstellung;
- Fig. 6: eine seitliche Teilansicht einer Fördervorrichtung aus dem Stand der Technik.

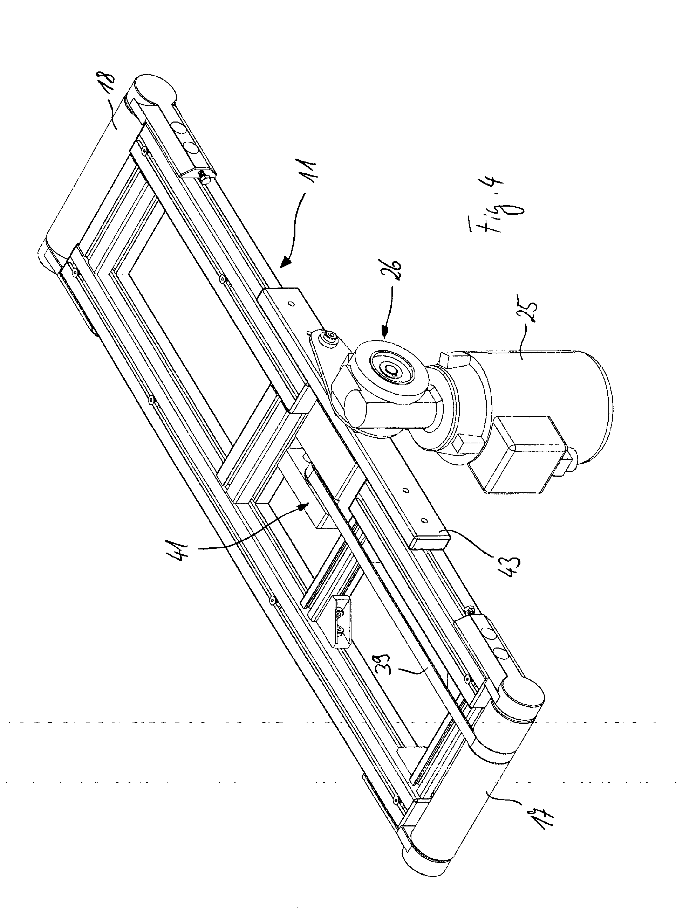

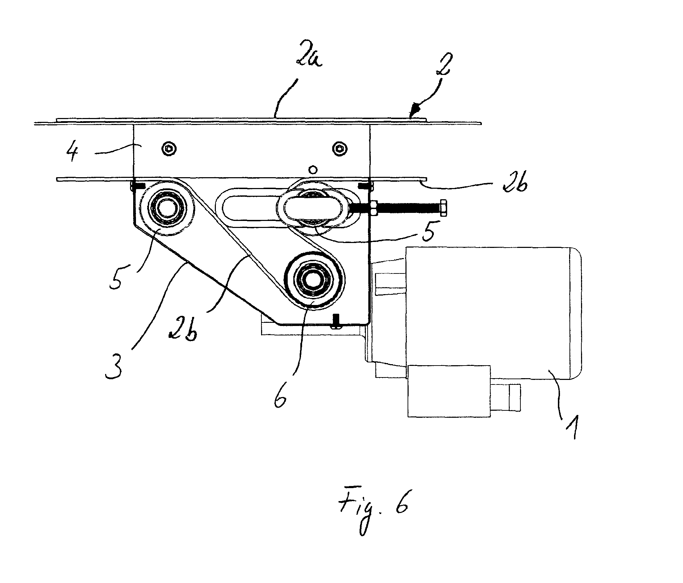

In der Teilansicht von Fig. 6 ist der Antriebsteil einer Fördervorrichtung aus dem Stand der Technik gezeigt. Ein Fördergurt 2, von dem ein Teil der oberen und der unteren Gurtlage 2a, 2b zu erkennen ist, kann von einem Elektromotor 1 in eine umlaufende Bewegung versetzt werden. Hierzu treibt die Antriebswelle des Elektromotors 1 eine Antriebsrolle 6 an, die von einem Abschnitt der unteren Gurtlage 2b teilweise umschlungen wird. Damit ein ausreichender Umschlingungswinkel erzielbar ist, sind in Verlaufsrichtung des Fördergurtes 2 vor und hinter der Antriebsrolle 6 jeweils eine Umlenkrolle 5 vorgesehen. Um Verletzungen oder Einzüge zu vermeiden, werden die drei Rollen 5, 6 sowie der in diesem Bereich verlaufende Abschnitt des Fördergurtes 2 von einer seitlichen Platte 3 abgedeckt, die als Berührungsschutz vorgesehen ist. Die beiden endseitigen Umlenkrollen der Fördervorrichtung sind in der Darstellung von Fig. 4 nicht zu erkennen. Bei einem Wechsel des Fördergurtes 2 müssen der Berührungsschutz 3 sowie eine Seitenplatte 4 demontiert werden, an der u.a. die Antriebsrolle 6 befestigt ist.

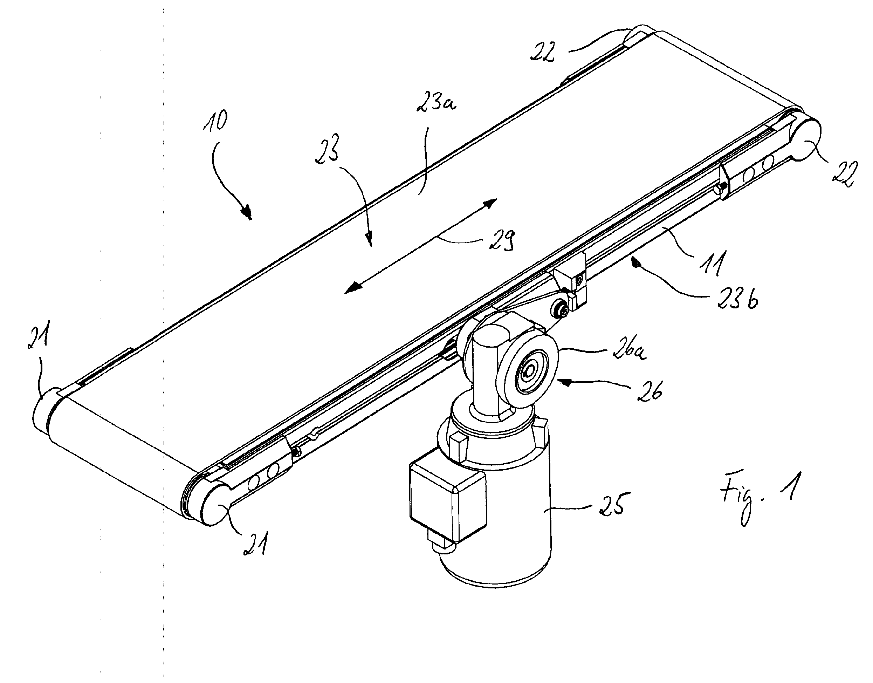

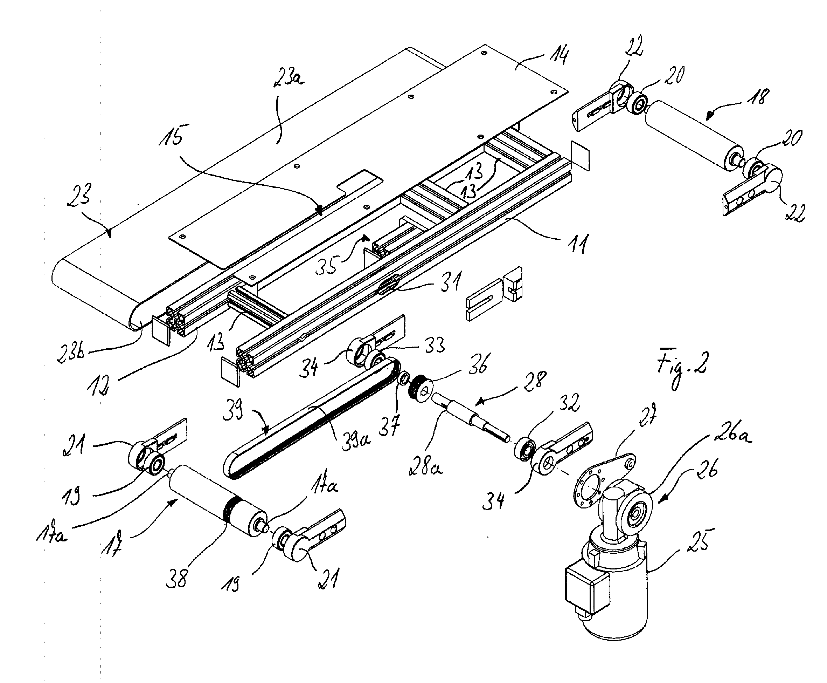

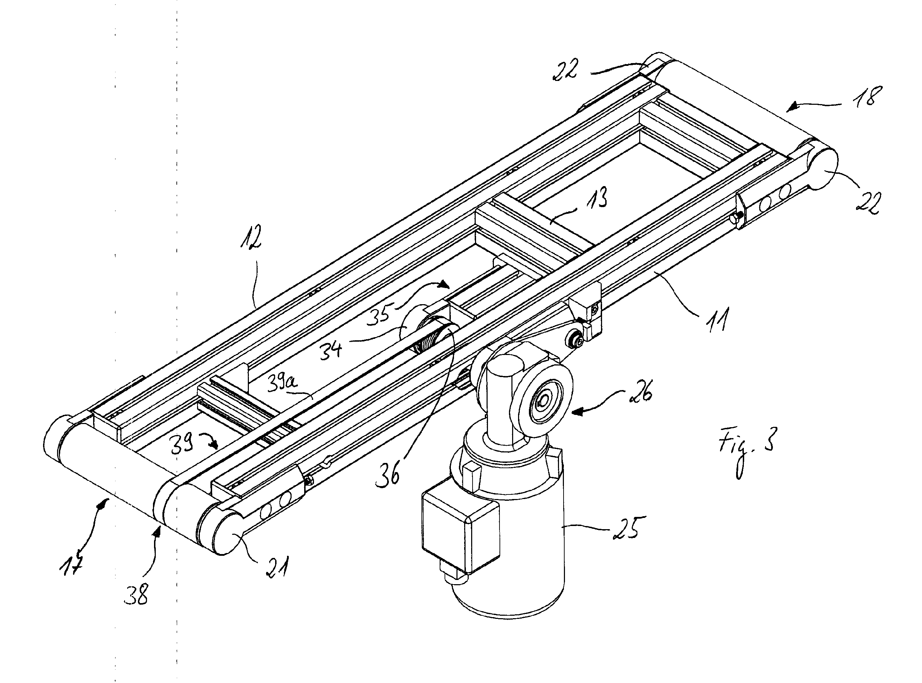

Die Fig. 1 bis 3 geben eine erfindungsgemäße Fördervorrichtung wieder. Diese weist ein aus zwei Längs- sowie mehreren Querprofilträgern 11, 12, 13 zusammen gesetztes Gestell auf, das im wesentlichen eine rechteckige Form hat. Die gesamte Oberseite des Gestells ist von einer aufgesetzten Platte 14 abgedeckt, die mit einem Schlitz 15 versehen ist. An jeder der beiden Stirnseiten des Gestells ist jeweils eine Umlenkrolle 17, 18 mittels zwei Radiallagern 19, 20 gelagert. Die Radiallager 19, 20 nehmen hierbei mit ihrem Innenring jeweils einen Wellenzapfen 17a der Umlenkrolle 17 auf. Mit ihrem Außenring sind die Radiallager 19, 20 in Lagergehäusen 21, 22 angeordnet, die an dem Gestell befestigt sind. Der in der Darstellung von Fig. 1 und in der Explosionsdarstellung von Fig. 2 gezeigte Endlos-Fördergurt 23 ist über die beiden Umlenkrollen 17, 18 geführt und gespannt.

In grober Näherung etwa mittig zwischen den beiden Umlenkrollen 17, 18 ist in Bezug auf die Bewegungssrichtung der oberen Gurtlage 23a des Fördergurtes 23 ein Elektromotor 25 seitlich neben dem Gestell angeordnet. An die (in den Figuren nicht erkennbare) Motorwelle des Elektromotors 25 ist ein Getriebe 26, beispielsweise ein Schneckenradgetriebe, angeschlossen von dem in den Fig. 1-3 nur das Getriebegehäuse 26a zu erkennen ist. Die Gehäuse des Getriebes und des Elektromotors sind miteinander verschraubt und mittels einer Befestigungsplatte 27 gemeinsam am vorderen Längsprofilträger 11 befestigt.

Die ausgangseitige Getriebewelle 28 des Getriebes 26 schließt mit der Motorwelle einen-Winkel von 90° ein, ist näherungsweise parallel zu den beiden Gurtlagen 23a, 23b und quer zur Transportrichtung 29 des Fördergurtes 23 ausgerichtet. Die Getriebewelle 28 ist durch eine Ausnehmung 31 des vorderen Längsprofilträgers 11 durchgeführt und ragt in den Bereich zwischen die beiden Gurtlagen 23a, 23b hinein. Die Getriebewelle 28 ist mittels zwei Radiallagern 32, 33 gelagert, die in Lagergehäuse 34 angeordnet sind. Die Lagergehäuse 34 sind mit nicht näher dargestellten Befestigungsmitteln und Trägermaterial 35 am Gestell befestigt. Auf der Getriebewelle 28 ist zudem eine Riemenscheibe 36 drehfest angeordnet. Zur eindeutigen Positionierung der Riemenscheibe 36 auf der Welle 28 liegt die Riemenscheibe 36 an einer Seite gegen eine Schulter 28a der Welle 28 und an der anderen Seite gegen eine Distanzscheibe 37 an.

Die in den Fig. 1-3 vordere Umlenkrolle 17 weist zwischen ihren beiden Wellenzapfen 17a an ihrer Umfangsfläche einen Bereich reduzierten Durchmessers auf, der als Eindrehung 38 ausgebildet ist. Die profilierte Eindrehung 38 befindet sich in dem Bereich, in dem der Fördergurt 23 über die Umlenkrolle 17 geführt ist. Ein Keilrippenriemen 39 ist sowohl über die Riemenscheibe 36 als auch über die Umlenkrolle 17 geführt und liegt hierbei in der Eindrehung 38. Es hat sich gezeigt, daß bei bestimmten Riemen, wie beispielsweise Zahn-, Keil-, Flach- oder Keilrippenriemen es von Vorteil sein kann, wenn der Fördergurt den Riemen im Bereich der Umlenkrolle 17 berührt. In diesem Fall kann die Tiefe der Eindrehung 38 und die Riemenhöhe so aufeinander abgestimmt sein, daß eine Außenfläche des Riemens 39 mit der Umfangsfläche der Umlenkrolle 17 etwa bündig zu liegen kommt. Bei anderen Hüllgliedern, wie beispielsweise Rundriemen oder einer Kette, sollten jedoch diese Hüllglieder in der Umlenkrolle 17 mit Abstand zum Fördergurt angeordnet sein.

Der Riemen 39 befindet sich somit zwischen den beiden Gurtlagen 23a, 23b und mit Abstand zu den beiden seitlichen Rändern des Fördergurtes 23. Der obere Trum 39a des Riemens 39 verläuft zudem innerhalb des Schlitzes 15 der Platte 14.

Bei der in den Figuren 1-3 gezeigten erfindungsgemäßen Ausführungsform wird die Drehbewegung der Motorwelle auf das Getriebe 26 und von diesem auf die ausgangseitige Getriebewelle 28 übertragen. Die hierdurch in Rotation versetzte Riemenscheibe 36 nimmt dann in der weiteren Übertragungsrichtung im wesentlichen aufgrund von Reibung den Keilrippenriemen 39 mit. Der Riemen-39 treibt-dadurch die Umlenkrolle 17 ohne Zwischenschaltung von weiteren Übertragungsmitteln direkt an. Die Umlenkrolle 17 wiederum versetzt den Fördergurt 23 in eine Umlaufbewegung. Eine Drehrichtungsumkehr kann durch Änderung der Drehrichtung des Elektromotors erreicht werden, wobei für beide Drehrichtungen gleiche Übertragungsbedingungen der Rotationsbewegung auf den Fördergurt herrschen.

Auch ein Wechsel des Fördergurts 23 kann auf einfachste Weise erfolgen. Hierzu muß lediglich an der Umlenkrolle 18 der Fördergurt durch Lösen seiner Lagergehäuse 22 und der dann möglichen geringfügigen Verringerung des Abstandes der beiden Umlenkrollen 17, 18 entspannt werden. Der Fördergurt 23 kann daraufhin seitlich, d.h. in einer Richtung quer zur Transportrichtung 29, von beiden Umlenkrollen 17, 18 abgezogen werden. Ein neuer Fördergurt kann nun aufgezogen und die Umlenkrolle 18 wieder gespannt werden. Anders als bei vorbekannten Fördervorrichtungen, wie beispielsweise jener aus Fig. 6, ist eine Justage der Antriebseinheit der erfindungsgemäßen Fördervorrichtungen 10 nicht erforderlich. Die Fördervorrichtung 10 kann ohne eine solche Justage sofort wieder in Betrieb genommen werden.

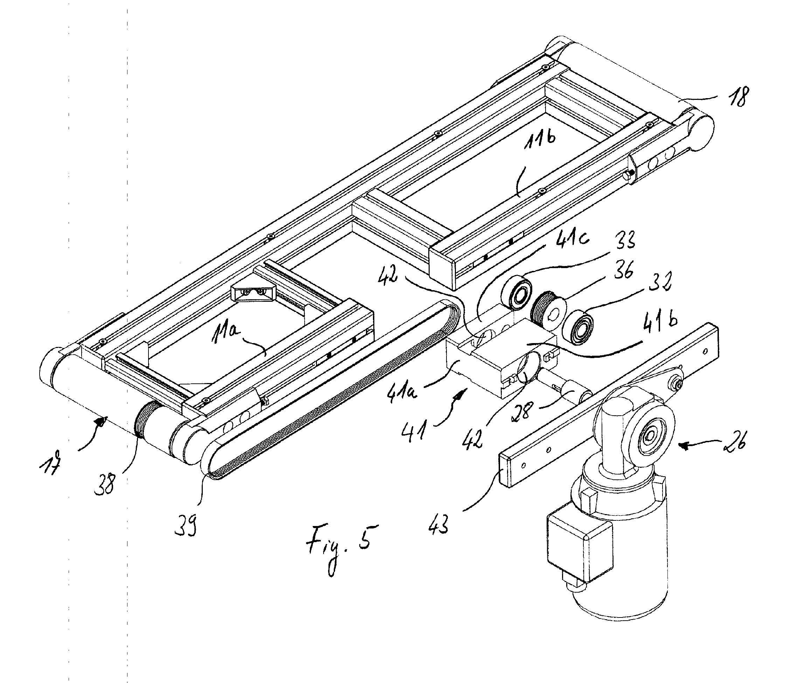

In den Fig. 4 und 5 ist ein zweites Ausführungsbeispiel dargestellt, das bis auf den nachfolgend beschriebenen Unterschied mit dem Ausführungsbeispiel der Fig. 1-3 im wesentlichen übereinstimmt. Prinzipiell gleiche Bauteile sind deshalb auch mit den gleichen Bezugszeichen versehen.

Bei dem Gestell dieses Ausführungsbeispiels ist der Längsträger 11 näherungsweise in der Mitte unterbrochen und ein separates Gehäuseteil 41 ist zwischen die beiden Teile 11a, 11b des Längsträgers 11 eingesetzt. Das Gehäuseteil 41 weist zwei über einen Steg 41 a miteinander verbundene Schenkel 41 b, 41 c auf, die mit jeweils einer Ausnehmung 42 zur Aufnahme der beiden Radiallager 32, 33 versehen sind. Die in den Radiallagern gelagerte Welle 28 ist durch die Ausnehmungen 42 durchgeführt. In einem Abstandsbereich der beiden Schenkel 41 b, 41 c befindet sich die auf der Welle 28 angeordnete Riemenscheibe 36.

Das Gehäuseteil 41 ist an einem Verbindungsträger 43 befestigt, der wiederum an beiden Teilen 11a, 11b des Längsprofilträgers 11 lösbar befestigt ist. Auf der dem Gehäuseteil 41 gegenüberliegenden Seite des Verbindungsträgers 43 ist das Getriebe 26 mit angeflanschtem Elektromotor 25 befestigt. Auch bei diesem Ausführungsbeispiel ist der über die Riemenscheibe 36 geführte Riemen im Bereich ihrer Umfangsfläche über die Umlenkrolle 17 geführt.

Dieses Ausführungsbeispiel ermöglicht ein einfaches Wechseln des Antriebs, da hierzu lediglich der Antrieb am Verbindungsträger gelöst und getauscht werden muß. Für den Tausch ist es insbesondere nicht erforderlich, den Gurt und den Riementrieb selbst zu demontieren. Auch ein Spannen des Riemens, beispielsweise nachdem sich der Riemen gelängt hat, ist auf sehr einfache Weise jederzeit möglich. Hierzu muß nur der Verbindungsträger gelöst und in Richtung auf die Umlenkrolle 18 verschoben werden. Dies kann selbst bei montiertem Fördergurt erfolgen.

Schließlich können mit diesem Ausführungsbeispiel auch mit geringem Aufwand Fördervorrichtungen mit unterschiedlichen Längen erzeugt werden. Da die Profilträger Standardteile sind, die lediglich zugeschnitten werden müssen und auch sonst keine längenabhängige Bearbeitung erforderlich ist, entfällt eine aufwendige Fertigung und Lagerhaltung von längenspezifischen Bauteilen der Fördervorrichtung.

### Bezugszeichenliste

- 1: Elektromotor
- 2: Fördergurt
- 2a: obere Gurtlage
- 2b: untere Gurtlage
- 3: Platte
- 4: Seitenplatte
- 5: Umlenkrolle
- 6: Antriebsrolle
- 10: Fördervorrichtung
- 11: vorderer Längsprofilträger
- 11a: Teil von 11
- 11b: Teil von 11
- 12: hinterer Längsprofilträger
- 13: Querprofilträger
- 14: Platte
- 15: Schlitz
- 17: Umlenkrolle
- 17a: Wellenzapfen
- 18: Umlenkrolle
- 19: Radiallager
- 20: Radiallager
- 21: Lagergehäuse
- 22: Lagergehäuse
- 23: Fördergurt
- 23a: obere Gurtlage
- 23b: untere Gurtlage
- 25: Elektromotor
- 26: Getriebe
- 26a: Getriebegehäuse
- 27: Befestigungsplatte
- 28: Getriebewelle
- 28a: Schulter
- 29: Transportrichtung
- 31: Ausnehmung
- 32: Radiallager
- 33: Radiallager
- 34: Lagergehäuse
- 35: Trägermaterial
- 36: Riemenscheibe
- 37: Distanzscheibe
- 38: Eindrehung
- 39: Riemen
- 39a: oberer Trum
- 41: Gehäuseteil
- 41 a: Steg
- 41 b: Schenkel
- 41 c: Schenkel
- 42: Ausnehmung
- 43: Verbindungsträger

## Patentansprüche

1. Fördervorrichtung zum Transport von Fördergut auf einem Endlos-Fördergurt, der an zumindest zwei Umlenkrollen anliegt, von denen zumindest eine als angetriebene Umlenkrolle ausgestaltet ist, die angetriebene Umlenkrolle hierzu mit einem Antriebsmotor in Wirkverbindung steht, wobei die Wirkverbindung eine Übertragung einer Antriebsbewegung des Antriebsmotors auf die angetriebene Umlenkrolle zum Gegenstand hat, wodurch die zumindest eine angetriebene Umlenkrolle in eine Rotationsbewegung versetzbar ist, die zu einer Transportbewegung des Endlos-Fördergurtes führt, und der Antriebsmotor in Bezug auf eine Transportrichtung der Fördervorrichtung zwischen den beiden Umlenkrollen und mit Abstand zu diesen angeordnet ist,
**dadurch gekennzeichnet, daß**
die Wirkverbindung der angetriebenen Umlenkrolle mit dem Antriebsmotor einen Hülltrieb umfaßt, der sich in Übertragungsrichtung der Antriebsbewegung zwischen dem Antriebsmotor (25) und dem mit der angetriebenen Umlenkrolle in Kontakt stehenden Fördergurt (23) befindet.

2. Fördervorrichtung nach Anspruch 1, **dadurch gekennzeichnet, daß** sich der Hülltrieb zwischen einer oberen und einer unteren Gurtlage (23a, 23b) des Fördergurtes (23) befindet.

3. Fördervorrichtung nach Anspruch 1 oder 2, **dadurch gekennzeichnet, daß** der Hülltrieb ein Hüllglied aufweist, das zwischen den beiden Rändern des Fördergurtes (23) angeordnet ist.

4. Fördervorrichtung nach zumindest einem der vorhergehenden Ansprüche, **dadurch gekennzeichnet, daß** ein Hüllglied des Hülltriebs mit einer der beiden endseitigen Umlenkrollen (17, 18) in Wirkverbindung steht.

5. Fördervorrichtung nach Anspruch 4, **dadurch gekennzeichnet, daß** das Hüllglied in einem Bereich zwischen den beiden seitlichen Rändern des Fördergurtes (23) über die Umlenkrolle (17, 18) geführt ist.

6. Fördervorrichtung nach zumindest einem der vorhergehenden Ansprüche 3 bis 5, **dadurch gekennzeichnet, daß** die Umlenkrolle (17, 18) mit einem Bereich mit reduziertem Durchmesser zur Aufnahme des Hüllgliedes versehen ist, wodurch das zwischen der oberen und unteren Gurtlage (23a, 23b) des Fördergurtes (23) angeordnete Hüllglied an der Umlenkrolle (17, 18) anliegt.

7. Fördervorrichtung nach zumindest einem der vorhergehenden Ansprüche 3 bis 6, **dadurch gekennzeichnet, daß** der Fördergurt im Bereich der Umlenkrolle (17, 18) sowohl gegen die Umlenkrolle als auch gegen das Hüllglied anliegt.

8. Fördervorrichtung nach zumindest einem der vorhergehenden Ansprüche 3 bis 7, **gekennzeichnet durch** ein Gestell zur Lastabtragung, das zumindest zwei Träger (11, 12, 13) aufweist, wobei das Hüllglied zumindest teilweise zwischen den beiden Trägern (11, 12, 13) angeordnet ist.

9. Fördervorrichtung nach zumindest einem der vorhergehenden Ansprüche, **dadurch gekennzeichnet, daß** der Hülltrieb als Riementrieb oder als Kettentrieb ausgestaltet ist.
